# EUROPEAN PATENT APPLICATION

(11) **EP 1 801 148 A1**
(43) Date of publication of application: **27.06.2007**
(21) Application number: 05112516.9
(22) Date of filing: 20.12.2005
(51) Int. Cl.: C08K 5/00, C08L 67/02, C08L 23/10, B07C 5/34

(54) **Method for sorting and recycling polypropylene articles**

(71) Applicant: TOTAL PETROCHEMICALS RESEARCH FELUY, 7181 Seneffe (Feluy) (BE)
(72) Inventor: Humbeeck, Emmanuel, B-7181, Feluy (BE)

(57) **Abstract**

The invention discloses the use, in polypropylene compositions suitable for the production injection-stretch-blow-moulded bottles, of a UV tracer in order to improve the ease and accuracy of sorting PP and PET bottles.

## Description

This invention relates to the field of efficiently sorting injection-stretch-blow-moulding bottles in view of recycling.

For ecological reasons, a lot of emphasis has been placed on the recycling of plastic articles and in the near future, new regulations may force an increasing fraction of all plastics sold to be recycled.

Most recycling was tedious and lengthy as articles prepared from different materials had to be recycled separately because they were not compatible. For example, polyethylene terephthalate (PET) and polypropylene (PP) or polyethylene (PE) could not be recycled together. Reclaimed material is most valuable when it is pure and it must therefore be sorted prior to recycling.

In the past, many containers, whether for food applications or for cosmetic or detergent applications, were prepared by Injection-Stretch-Blow-Moulding (ISBM) from polyethylene terephthalate (PET). Some articles were also prepared by blow moulding from polyethylene resins. All these articles were sorted either manually or automatically.

In case of manual sorting, articles were hand picked from the sorting line and operators used sample features to identify their nature. The manual separation was based principally on shape recognition and level of transparency, PE being much less transparent than PET. Also, some brand names use bottles having a precise shape and prepared from a precise resin generally always the same. The workers, who had no chemical knowledge, thus sorted the articles by shape.

There were many reasons for inaccurate separation of the different resins: human errors or change in material from the container-producing firms or co-existence for a single product of several variants, or composite containers having for example the bottle prepared from one resin and the top prepared from another resin, all led to a non negligible amount of mixing.

The mechanical separation was based on shape recognition and high speed X-ray and infra-red sensors. They could also be sent in a bath of water and separated by density differentiation whereby the PET or polyvinyl chloride (PVC) being denser than water would sink and the polyethylene and polypropylene that were lighter than water would float. The products then had to be dried.

These procedures were not only lengthy, but they were also inaccurate and a non-negligible fraction of unwanted polymer inevitably missed detection during the sorting procedure. For fractions of unwanted polymers or contaminants, the recycled resin had significantly lost mechanical properties and the whole batch was thus not directly usable.

To add to this difficulty, polypropylene has recently proven very attractive in the field of rigid solid packaging and it is progressively replacing PET in ISBM applications. The articles prepared from polypropylene have remarkable optical properties: they have an excellent transparency throughout their whole body. In addition, they have a number of desirable properties such as for example low water vapour permeability, good squeezability, warm touch, outstanding engraving capability and excellent heat resistance allowing for example hot filling, microwave heating or sterilisation.

The introduction of polypropylene in the field of ISBM has further allowed the development of new markets: for example polypropylene articles can advantageously replace articles prepared from glass or cardboard.

Most recycling facilities today operate manually and are best equipped to separate PET from PE articles but are not equipped to sort PP articles. To make matters worse, ISBM PP articles now can be made to have the same appearance as PET articles, thereby making sorting very difficult.

There is thus a need to develop a simple and accurate method for sorting PET and polypropylene in view of recycling.

It is an aim of the present invention to provide a fast and accurate method for sorting PET and polypropylene bottles in view of recycling.

It is also an aim of the present invention to provide recycled polypropylene and PET resins containing no or little contaminants.

Accordingly the present invention discloses the use of a composition comprising a homo- or a co-polymer of propylene and a tracer additive for the accurate sorting of polypropylene articles, in the recycling of PET and polypropylene bottles.

In a preferred embodiment according to the present invention the PET and polypropylene bottles are prepared by injection-stretch-blow-moulding (ISBM).

The tracer additive is selected to allow easy automatic detection. In addition it must not interfere with the mechanical properties of the finished articles. The preferred tracer additive according to the present invention is a UV tracer that is a fluorescent whitening agent. The fluorescent agents absorb invisible UV radiations in the wavelength range of about 360 to 380 nm, converting it to longer wavelength and re-emitting it as a visible blue or violet light. In order to achieve maximum effectiveness, the fluorescent agent must be fully dissolved and homogeneously distributed in the finished article: sufficient compatibility is thus necessary.

The preferred fluorescent agents according to the present invention have a series of conjugated unsaturations and can be selected from bis-benzoxazole of formula I 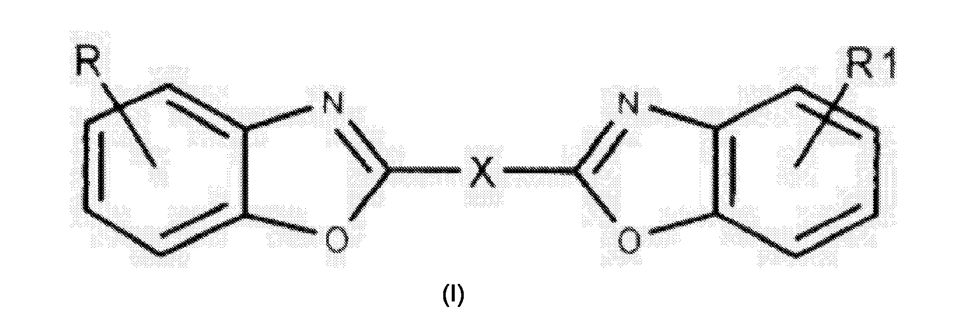 or from phenylcoumarin of formula II 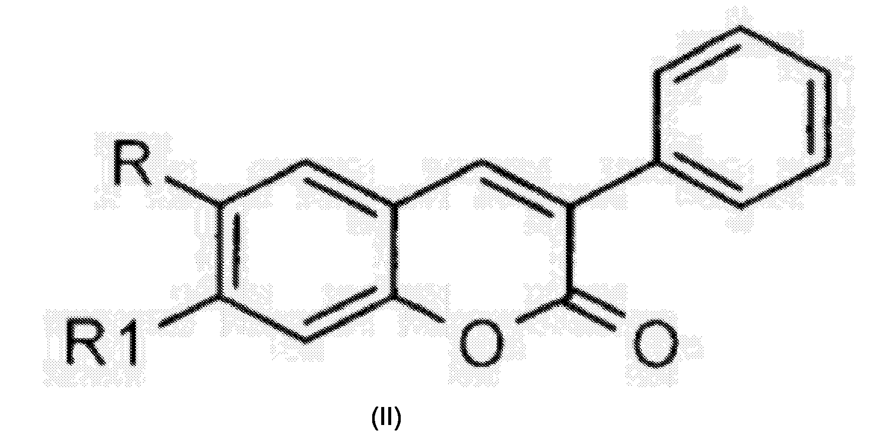 or from bis-(styril)biphenyl of formula III 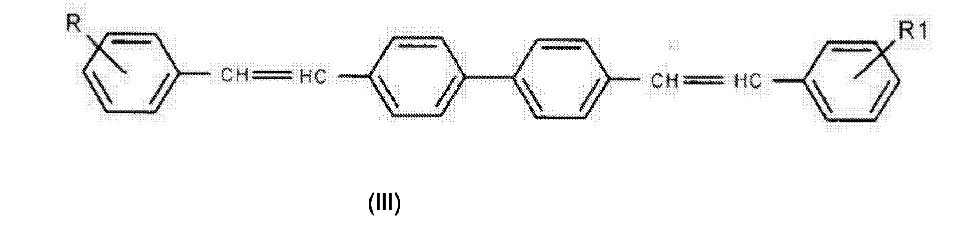 wherein R and R1 are each independently selected from hydrocarbons having from 1 to 12 carbon atoms and X is a system of conjugated double bonds such as for example furane, thiophene or pyrrole.

The most preferred fluorescent agent used in the present invention is represented by formula

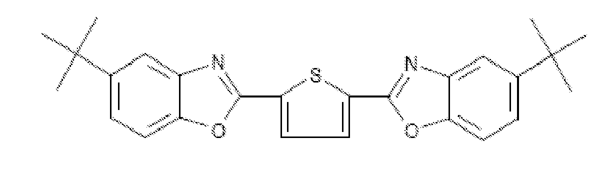

The fluorescent agent is incorporated into the thermoplastic mass before the forming process: it is typically introduced by extrusion with polypropylene powder and other additives.

The amount of fluorescent agent necessary to allow easy detection is of from 0.1 to 100 ppm, preferably of from 1 to 10 ppm, and more preferably of from 2 to 5 ppm.

The polypropylene that can be used in the present invention is not particularly limited and can be prepared by any method known in the art, such as for example with a Ziegler-Natta or a metallocene catalyst system. It may be a homopolymer, a random copolymer of propylene or a block copolymer of propylene and other olefins such as ethylene. The melt index is not particularly limited and depends upon the desired final object. It is of 0.3 to 150 dg/min, preferably of from 1.5 to 100 g/10 min, more preferably of from 2 to 30 g/10 min and most preferably from 10 to 20 g/10min. When it is a copolymer of propylene, the preferred comonomer is ethylene and the amount of ethylene present in the resin is of at from 0.3 to 7 wt%, preferably of from 2 to 5 wt%.

The melt flow index MFI is measured using the procedures of standard test ISO 1133 at 230 °C for homo- or co-polymers of propylene and under a load of 2.16 kg.

The polypropylene resin may additionally contain usual additives and nucleating agents.

The presence of a UV tracer in the polypropylene resin makes the sorting of ISBM PP articles very easy either manually or mechanically with appropriate detector. These articles are fluorescent when submitted to a simple fluorescent light source.

X-ray detectors, already present in sorting facilities, allow a first separation based on the presence or absence of chlorine: articles prepared from polyvinyl chloride (PVC) are thus separated from those prepared from PET, PP or PE. Among these remaining articles and in the case of transparent containers, those prepared from PE can be manually separated out because of their strikingly different level of transparency. The remaining PET and PP articles have a very similar appearance and are used in the same markets: thus they are difficult to differentiate visually. The addition of a UV tracer in PP resins allows their easy detection with a UV detector and thus PP articles can be separated out from the PET articles, based on the presence of the UV tracer.

The separation of PP and PET is thus easily achieved by the present invention.

The present invention also discloses a method for sorting transparent plastic bottles that comprises the steps of:
a) providing transparent bottles prepared from various resins, wherein PP bottles are prepared from a polypropylene composition that includes a UV tracer;
b) providing an X-ray apparatus comprising a detector for a first separation based upon the presence or absence of chlorine;
c) manually sorting and removing the PE bottles based upon transparency;
d) providing a UV apparatus comprising a UV detector for the separation of PP bottles, based upon the presence of the UV tracer;
e) recovering separately polypropylene and PET bottles that are substantially free of contaminants.

All the resins sorted according to the present invention can then be recycled separately.

The reclaimed bottles obtainable by the method according to present system are substantially free of contaminants.

Reclaimed resins that contain no or little contaminants retain excellent mechanical properties. PET resins free of contaminants can for example be recycled in the field of fibres.

The present invention also discloses polypropylene compositions that include a UV tracer additive and injection-stretch-blow-moulded bottles prepared from these polypropylene compositions.

The present invention can advantageously be extended to non-transparent articles. The separation between PET and PE thus cannot be based on transparency properties but on the blow moulding "seams" characteristically present in blow moulded PE articles.

### Examples.

UV tracer UVITEX® commercialised by CIBA has successfully been used, in an amount of 3 ppm, with a random copolymer of propylene, PPR 7225 commercialised by TOTAL PETROCHEMICALS.

## Claims

1. Use of a composition comprising a homo- or a co-polymer of propylene and a tracer additive for the sorting of injection-stretch-blow-moulded bottles in view of recycling.

2. The use of claim 1 wherein the tracer additive is a fluorescent agent of general formula I for bis-benzoxazoles 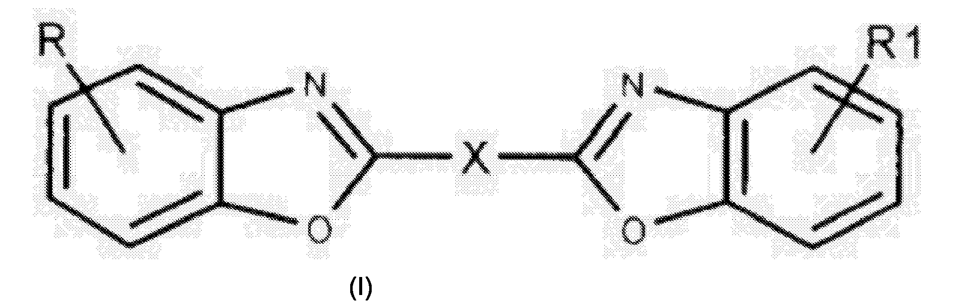 or formula II for phenylcoumarins 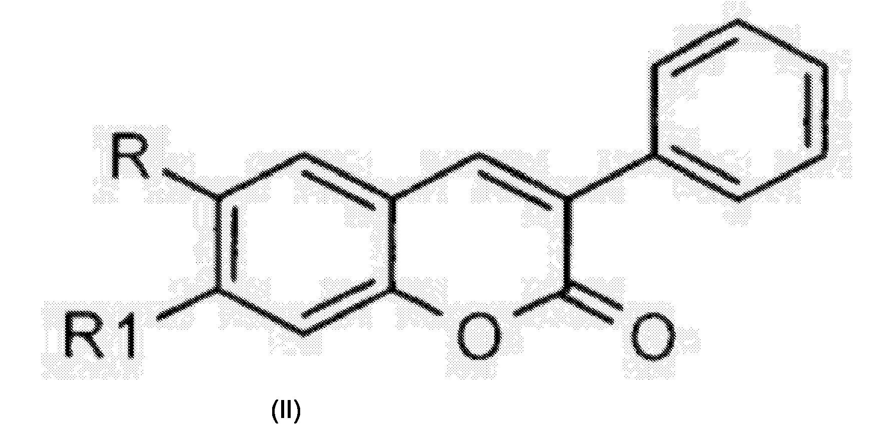 or formula III for bis-(styril)biphenyl 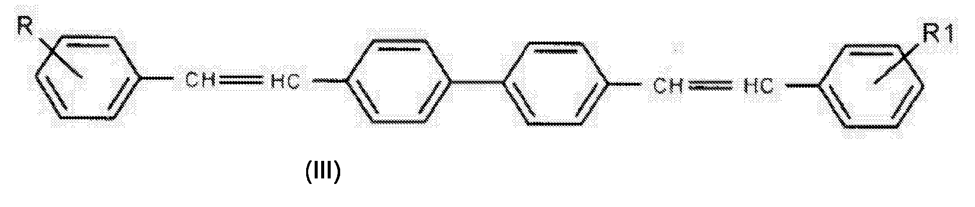 wherein R and R1 are each independently selected from and wherein X is a system of conjugated unsaturations.

3. The use of claim 2 wherein the fluorescent agent is represented by formula

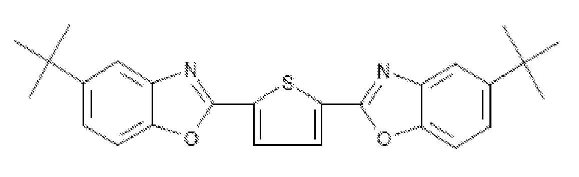

4. The use of any one of claims 1 to 3 wherein the fluorescent agent is present in an amount of from 0.1 to 100 ppm.

5. The use of any one of the preceding claims wherein the polypropylene is a homopolymer or a random copolymer of propylene having a melt index of from 0.5 to 150 dg/min.

6. The use of any one of the preceding claims wherein the injection-stretched-blow-moulded bottles to be sorted are prepared from PET and PP.

7. Composition comprising a homo- or a co-polymer of propylene and a tracer additive according to the use of any one of claims 1 to 6.

8. An article, produced by injection-stretch-blow-moulding, from the composition of claim 7.

9. A method for automatic sorting of injection-stretch-blow-moulded bottles that comprises the steps of:
a) providing bottles prepared from various resins, wherein PP bottles are prepared from the polypropylene composition of claim 7 that includes a UV tracer additive;
b) providing an X-ray apparatus comprising a detector for a first separation based upon the presence or absence of chlorine;
c) manually removing the PE bottles based upon their level of transparency;
d) providing a UV apparatus comprising a detector for separating PP bottles, based upon the presence of the UV tracer additive;
e) recovering polypropylene bottles substantially free of contaminants.

10. Recycled polypropylene and PET resins substantially free of contaminants obtainable by the method of claim 9.
